# EUROPÄISCHE PATENTSCHRIFT

(11) **EP 1 552 975 B1**
(45) Veröffentlichungstag und Bekanntmachung des Hinweises auf die Patenterteilung: **20.02.2008**
(21) Anmeldenummer: 04105678.9
(22) Anmeldetag: 11.11.2004
(51) Int. Cl.: B60K 35/00

(54) **Informationssystem für Fortbewegungsmittel**
Information system for a vehicle
Système d'information pour véhicule

(30) Priorität: 07.01.2004 DE 102004001113
(43) Veröffentlichungstag der Anmeldung: 13.07.2005
(73) Patentinhaber: ROBERT BOSCH GMBH, 70442 Stuttgart (DE)
(72) Erfinder: Koenig, Winfried, 76327 Pfinztal (DE); Eschler, Johannes, 71254 Ditzingen (DE); Hauk, Markus, 71696 Moeglingen (DE); Guenther, Clemens, 76275 Ettlingen (DE); Engeln, Arnd, 72072 Tuebingen (DE); Grimm, Dietmar, 71696 Moeglingen (DE)

(56) Entgegenhaltungen:
- WO-A-03/005102
- US-A1- 2003 055 596
- US-B1- 6 363 322
- US-B1- 6 516 273

## Beschreibung

### Technisches Gebiet

Die vorliegende Erfindung betrifft ein Fahrer Informations system für mindestens ein Kraftfahrzeug gemäß dem Oberbegriff des Anspruchs 1 sowie ein diesbezügliches Verfahren zum Informieren des Führers mindestens eines Kraftfahrzeugs.

### Stand der Technik

Es ist bekannt, in Fahrzeugen, insbesondere in Kraftfahrzeugen, zur Darstellung wichtiger Informationen eine Anzeigeeinrichtung einzusetzen, die eine sogenannte Head-up-Display-Vorrichtung aufweist. Hierbei wird eine von der Anzeigeeinrichtung gelieferte Anzeige, beispielsweise einer gefahrenen Geschwindigkeit, als virtuelles Bild in Fahrtrichtung vor dem Fahrersitz dargestellt und auf diese Weise die äußere Landschaft mit der Anzeige eines virtuellen Bilds vor oder auf der Windschutzscheibe visuell überlagert (vgl. zum Beispiel die Druckschriften DE 38 22 222 A1, DE 197 51 649 A1, DE 198 13 300 A1).

Weiterhin wurden in der K[raft]f[ahr]z[eug]-Industrie sowie Zulieferindustrie in der Vergangenheit unterschiedliche F[ahrer]A[ssistenz]S[ysteme] entwickelt. Hierzu gehören Hinderniserkennungssysteme, die gefährliche Objekte auf der Fahrbahn anhand ihres Bildes erkennen. Dieses Bild entsteht durch Reflexion von Tageslicht, von künstlichem Licht, von I[nfra]R[ot]-Strahlung oder von Mikrowellenstrahlung zu einer Optik und einem geeigneten Aufnehmer. In einem nachgeschalteten Verarbeitungssystem wird das Signal des Aufnehmers bearbeitet, und relevante Objekte werden identifiziert und eventuell markiert. Die auf diese Weise bearbeitete Information wird dem Führer des Fortbewegungsmittels zusammen mit den markierten Objekten über ein Display angezeigt (vgl. hierzu zum Beispiel die Druckschrift DE 43 27 706 A1).

Aus der Druckschrift EP 1 146 497 A1 ist ein Informationssystem der eingangs genannten Art bekannt (vgl. Oberbegriff des Anspruchs 1). Aufgrund der begrenzten Reichweite dieses Systems und der üblichen Geschwindigkeit der Fortbewegungsmittel, insbesondere der Fahrzeuge, verbleibt dem Führer des Fortbewegungsmittels nur sehr wenig Zeit, um vor einem Hindernis anzuhalten oder dem Hindernis in der richtigen Weise auszuweichen.

Aus der WO 03/005102 A1 ist eine Head-Up-Anzeige in einem System zur ortskorrekten Anzeige bekannt, bei dem gefährdete Objekte in der Anzeige besonders markiert und/oder hervorgehoben werden. Zudem werden mögliche Ausweichmanöver oder mehrere alternative Ausweichmanöver automatisch berechnet und in das Head-Up-Display eingeblendet. Der Fahrer wird hierdurch auf eine gefährliche Situation aufmerksam gemacht und kann beispielsweise durch eine Bestätigung ein Ausweichmanöver auswählen, das dann automatisch von dem Fahrzeug ausgeführt wird.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Fahrerinformationssystem der eingangs genannten Art sowie ein Verfahren der eingangs genannten Art so weiterzuentwickeln, dass dem Fahrer eines Kraftfahrzeugs die für ein geeignetes Fahrmanöver notwendigen Verarbeitungsprozesse weitgehend abgenommen werden und eine geeignete Handlungsstrategie schnell erfassbar vorgeschlagen wird.

Diese Aufgabe wird durch ein Fahrerinformationssystem mit den im Anspruch 1 angegebenen Merkmalen sowie durch ein Verfahren mit den im Anspruch 4 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Die Erfindung basiert auf einem System, das mindestens ein Head-up-Display aufweist und der Darstellung wichtiger Daten und/oder Informationen unter Berücksichtigung von Gefahrenräumen dient. Bei einem derartigen System, insbesondere bei einem derartigen Informationssystem, wird aus einer Prognose
- des Kurses des Fortbewegungsmittels, insbesondere des eigenen Kurses, und
- des Kurses von erkannten, das Fortbewegungsmittel umgebenden Objekten, zum Beispiel anderen Fortbewegungsmitteln,
ein Modell eines sogenannten Gefahrenraums erstellt.

Dieses Modell wird durch die Lehre gemäß der vorliegenden Erfindung wesentlich erweitert. Zu diesem Zwecke werden neben dem berechneten Gefahrenraum von erkannten Hindernissen erfindungsgemäß weitere Daten und/oder zusätzliche Informationen über relevante stationäre und/oder mobile Objekte im eigenen Fahrraum vom Auswertungssystem bzw. von der Auswertungseinheit berücksichtigt, bewertet und/oder gewichtet und in die Berechnung des Modells des Gefahrenraums einbezogen.

Diese weiteren Informationen und/oder zusätzlichen Daten stammen gemäß einer vorteilhaften Ausgestaltungsform der Erfindung von
- Sensoreinrichtungen oder Sensorsystemen des Fortbewegungsmittels, insbesondere des eigenen Fahrzeuges, und/oder
- Sensoreinrichtungen oder Sensorsystemen von Fortbewegungsmitteln, die das eigene Fortbewegungsmittel umgeben (diese weiteren Daten und/oder zusätzlichen Informationen werden in diesem Fall über Fahrzeug-Fahrzeug-Kommunikation an das eigene Fahrzeug übermittelt) und/oder
- ortsfesten Sensoreinrichtungen oder Sensorsystemen, deren Daten und/oder Informationen über eine Infrastruktur an das Fortbewegungsmittel, beispielsweise an das eigene Fahrzeug, übermittelt werden.

Diese weiteren Daten und/oder zusätzlichen Informationen beschreiben vorteilhafterweise
- generell das Potential von relevanten Objekten bezüglich einer Gefährdung des Fortbewegungsmittels und von dessen Insassen und/oder
- das Schadenspotential an den das Fortbewegungsmittel umgebenden Objekten selbst.
Zu diesen weiteren Daten und/oder zusätzlichen Informationen gehören zum Beispiel die Ausdehnung, der Geschwindigkeitsvektor, die Masse, die Position und/oder mindestens ein sensitiver Bewertungsparameter (sogenannter materieller und/oder ethischer Wert) zum Beispiel der Objekte.

Somit wird zweckmäßigerweise ein erweitertes Modell der Umgebung und der fahrdynamischen Parameter des Fortbewegungsmittels, insbesondere des eigenen Fahrzeugs, erstellt.

Auf der Basis dieses erweiterten Modells werden nun bei einer zweckmäßigen Ausführungsform der vorliegenden Erfindung verschiedene Fahrmanöver berechnet, die geeignet sind, den Objekten, insbesondere den Begrenzungen und/oder den Hindernissen, des Fahrraums auszuweichen, um auf diese Weise eine Kollision zu vermeiden.

Zweckdienlicherweise werden in einem weiteren Schritt diese Fahrmanöver, insbesondere hinsichtlich ihrer Sensibilität gegenüber möglichen Veränderungen der Umgebung, bewertet. So kann zum Beispiel ein dichtes Vorbeifahren an einem stationären Hindernis im Vergleich zum Vorbeifahren an einem beweglichen Hindernis als günstiger befunden werden, denn der künftige Kurs des beweglichen Hindernisses kann nur mit Unsicherheit abgeschätzt werden.

Auch Kenntnisse über die Festigkeit von Fahrbahnbegrenzungen können verwendet werden, um zum Beispiel zwischen den beiden möglichen Vorschlägen "Bremsen im eigenen Fahrstreifen" und "Verlassen des Fahrstreifens über die Böschung" zu entscheiden.

Es können für diese Bewertung auch allgemeine Erfahrungswerte einbezogen werden, wie zum Beispiel die Schwere von Unfallfolgen bei unterschiedlichen Fahrmanövern.

Die vorliegende Erfindung betrifft schließlich die Verwendung mindestens eines Informationssystems gemäß der vorstehend dargelegten Art und/oder eines Verfahrens gemäß der vorstehend dargelegten Art in mindestens einem F[ahrer]A[ssistenz]S[ystem], insbesondere mit Längs- und/oder Querführungsfähigkeit, zur Unfallvermeidung.

### Kurze Beschreibung der Zeichnungen

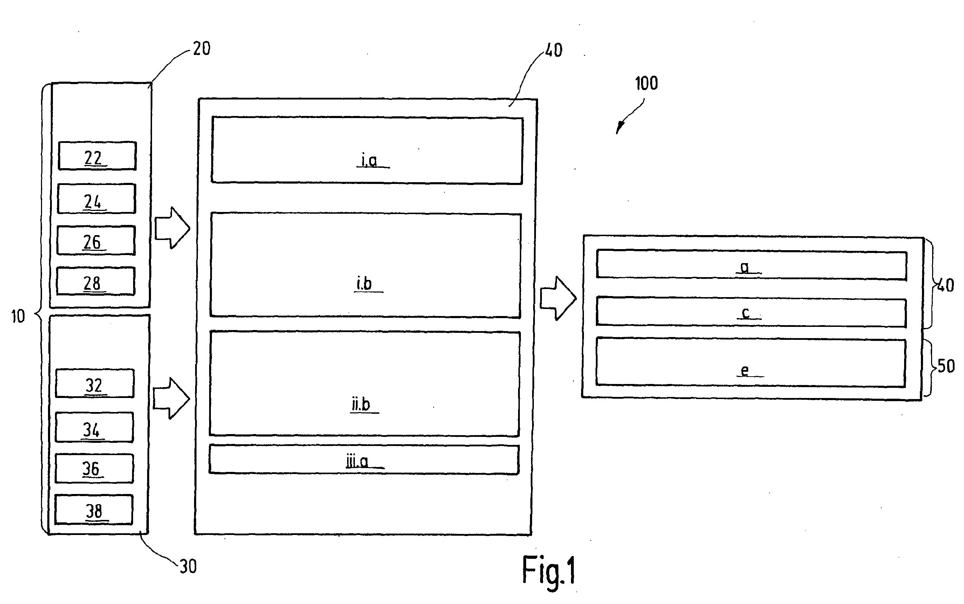

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 6 nachgeordneten Ansprüche verwiesen, andererseits werden weitere Ausgestaltungen, Merkmale und Vorteile der vorliegenden Erfindung nachstehend anhand des durch die Figuren 1 bis 3 veranschaulichten Ausführungsbeispiels näher erläutert. Es zeigt:
- Fig. 1: in schematischer Darstellung ein Ausführungsbeispiel für den Ablauf eines Verfahrens gemäß der vorliegenden Erfindung;
- Fig. 2: in schematischer Darstellung ein Ausführungsbeispiel für ein Informationssystem gemäß der vorliegenden Erfindung, das nach dem Verfahren aus Fig. 1 arbeitet; und
- Fig. 3: in schematischer Darstellung die Verwendung des Informationssystems aus Fig. 2 in einem Kraftfahrzeug.

Gleiche oder ähnliche Ausgestaltungen, Elemente oder Merkmale sind in den Figuren 1 bis 3 mit identischen Bezugszeichen versehen.

### Bester Weg zur Ausführung der Erfindung

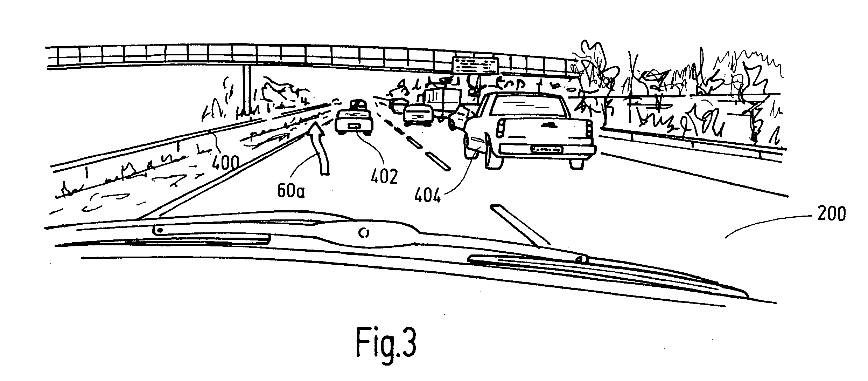

In Figur 1 ist der Ablauf eines Verfahrens zur Ermittlung und Darstellung eines optimalen Fahrmanövers veranschaulicht. Ziel des Verfahrens ist es, den Führer 300 (vgl. Figur 3) eines Kraftfahrzeugs über Gefahren zu informieren, zumindest bei Gefahrensituation ein optimales Fahrmanöver zu berechnen und das als am besten bewertete Fahrmanöver dem Fahrer 300 in leicht sowie schnell erfassbarer Form als Handlungsempfehlung darzubieten.

Hierfür werden Daten und Informationen mittels einer Erfassungseinheit 10 erhoben, die eine interne, fahrzeugeigene Sensoreinrichtung 20 und eine externe Sensoreinrichtung 30 aufweist.

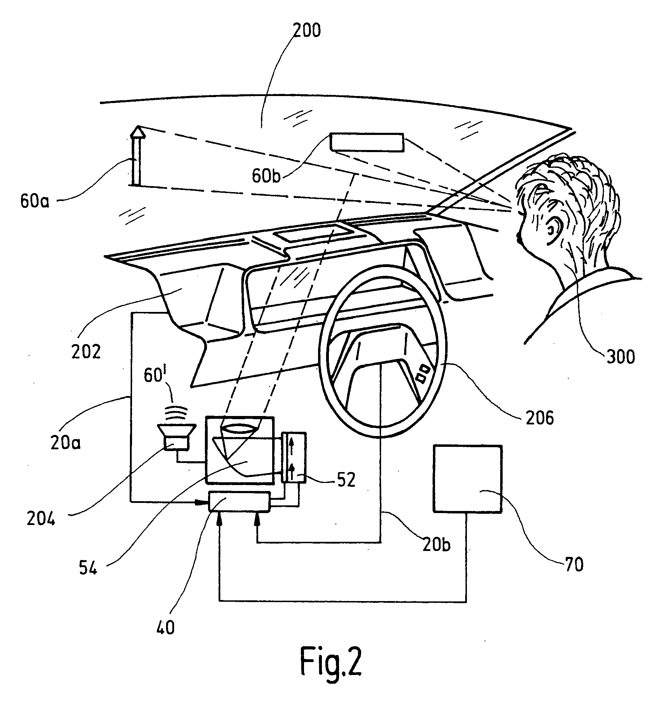

Die fahrzeugeigene Sensoreinrichtung 20 weist interne Sensoren 22, 24, 26, 28 auf und erfasst Daten sowie Informationen über die Fahrbedingungen des Fortbewegungsmittels. Mittels der von der internen Sensoreinrichtung 20 ermittelten Daten und Informationen berechnet eine Auswertungseinheit 40 (vgl. hierzu auch Figur 2) in einem Auswertungsschritt (--> Bezugzeichen i.a) die aktuelle Trajektorie des Fortbewegungsmittels und ermittelt den Fahrraum des Fortbewegungsmittels.

Die externe Sensoreinrichtung 30 weist externe Sensoren 32, 34, 36, 38 auf und erfasst Daten sowie Informationen über Objekte 400, 402, 404 (vgl. Figur 3) in der Umgebung des Fortbewegungsmittels. Mittels der von der externen Sensoreinrichtung 30 erfassten Daten und Informationen berechnet die Auswertungseinheit 40 in einem Auswertungsschritt (--> Bezugzeichen i.b) die Trajektorie dieser Objekte 400, 402, 404.

Die von der Erfassungseinheit 10 gelieferten Daten und Informationen werden mittels der Auswertungseinheit 40 hinsichtlich verschiedener, durch die Fahrbedingungen und durch die Umgebung bedingter Fahrzustände ausgewertet.

In einem weiteren Auswertungsschritt (--> Bezugzeichen ii.b) wird in erfindungswesentlicher Weise unter Berücksichtigung, Bewertung und Gewichtung von weiteren Daten und von zusätzlichen Informationen hinsichtlich der relevanten stationären Objekte 400 sowie hinsichtlich der relevanten mobilen Objekte 402, 404 das Potential für eine durch diese Objekte 400, 402, 404 bedingte Gefährdung ermittelt. Diese weiteren Daten und zusätzlichen Informationen werden von der Erfassungseinheit 10 ermittelt und beschreiben beispielsweise den Geschwindigkeitsvektor oder die Dichte der Objekte 400, 402, 404.

In einem nächsten Verfahrensschritt (--> Bezugzeichen iii.a) wird von der Auswertungseinheit 40 ein Modell eines Gefahrenraums berechnet. Bei der Berechnung dieses Gefahrenraums werden die berücksichtigten, bewerteten und gewichteten weiteren Daten und zusätzlichen Informationen einbezogen.

Darauf aufbauend berechnet die Auswertungseinheit 40 in einem nachgeordneten Verfahrensschritt (--> Bezugzeichen a) aus der Gesamtheit der von der Erfassungseinheit 10 gelieferten Daten und Informationen mögliche Fahrmanöver zur Vermeidung einer Kollision des Kraftfahrzeugs mit den Hindernissen 400, 402, 404, die sich im Fahrraum des Kraftfahrzeugs befinden.

Die möglichen Fahrmanöver werden hinsichtlich ihrer Sensibilität gegenüber möglichen Veränderungen der Umgebung miteinander verglichen, und in einem weiteren Verfahrensschritt (--> Bezugzeichen c) wird aus den berechneten möglichen Fahrmanövern ein optimales, das heißt ein einen Unfall bzw. Unfallschäden vermeidendes Fahrmanöver ausgewählt.

Schließlich werden die Informationen des optimalen Fahrmanövers an eine Einrichtung 50 weitergeleitet, die in einem weiteren Verfahrensschritt (--> Bezugzeichen e) das optimale Fahrmanöver in Abhängigkeit vom insgesamt erstellten Modell des Gefahrenraums optisch signalisiert (vgl. Bezugszeichen 60a, 60b in Figur 2), nämlich virtuell und graphisch darstellt.

Figur 2 zeigt einen Fahrzeuginnenraum (sogenannte Fahrgastzelle) mit Bedienungselementen, wobei in einem Blockschaltbild in der unteren Hälfte von Figur 2 Teile eines Fahrerinformationssystems 100 gemäß der vorliegenden Erfindung, nämlich eines Head-up-Displays dargestellt sind. Hinter dem Lenkrad 206 des Kraftfahrzeugs ist ein Armaturenbrett 202 dargestellt; vor dem Lenkrad 206 ist ein das Kraftfahrzeug bedienender Fahrer 300 dargestellt, der durch die Windschutzscheibe 200 das Verkehrsgeschehen überwacht.

Dargestellt ist in Figur 2 des weiteren eine Bildquelle 52 der Einrichtung 50, nämlich ein durchleuchteter L[iquid]C[rystal]D[isplay]-Schirm oder eine Laserlichtquelle zur Erzeugung von für den Fahrer 300 wesentlichen Informationen, nämlich der Anzeige des berechneten optimalen Fahrmanövers bei Gefahrensituationen.

Das Informationssystem 100 wird in einem Fahrerassistenzsystem mit Längs- und Querführungsfähigkeit zur Unfallvermeidung verwendet und weist des weiteren ein Navigationssystem 70 auf, das mit einem G[lobal]P[ositioning]S[ystem]-Empfänger sowie mit einem D[ifferential]G[lobal]P[ositioning]S[ystem]-Empfänger versehen ist und dessen Informationen von einer Ansteuerelektronik der Auswertungseinheit 40 auswertbar sind.

Die Bildquelle 52 ist gekoppelt mit der Auswertungseinheit 40, welche die Ansteuerelektronik und eine darin enthaltene Recheneinheit aufweist, welche die Daten und Informationen hinsichtlich verschiedener Fahrzustands- und Fahrbetriebsparameter der Erfassungseinheit 10, nämlich des Lenkwinkelsensors 20a, des Fahrgeschwindigkeitssensors 20b und des Navigationssystems 70, auswertet und die das optimale Fahrmanöver berechnet.

Ein Abbildungssystem 54 der Einrichtung 50 sorgt für eine graphische Darstellung 60a, 60b des berechneten optimalen Fahrmanövers, das als wichtigste Information für den Fahrer 300 klar und deutlich dargestellt wird. Die Darstellung des Signals 60a, 60b geschieht durch ein Abbildungssystem 54, das ein Bild des Head-up-Displays erzeugt. Dieses Bild ist ein virtuelles Bild, das dem Fahrer 300 in einiger Entfernung vor der Windschutzscheibe 200 erscheint.

Das Abbildungssystem 54 enthält beispielsweise ein Spiegelsystem mit einer x-y-Ablenkeinheit zur flächigen Abbildung einer punktförmigen Laserlichtquelle oder ein Spiegelsystem zur variablen Abbildungspositionierung der von der Bildquelle 52 der Einrichtung 50 gelieferten Anzeigeinformation (sogenannte Head-up-Informationen). Auf diese Weise wird das Signal 60a, 60b bei jeder Fahrsituation für den Fahrer 300 schnell erfassbar dargestellt und nach einem für den Fahrer 300 zweckmäßigen Blickfeld angeordnet.

Als Signal 60a ist in Figur 2 ein grün markierter Fahrschlauch dargestellt, der den optimalen Weg zum Vorbeiziehen an einem Hindernis 402 (vgl. Figur 3) empfiehlt. In Ergänzung hierzu ist eine quer vor dem Fahrzeug erscheinende rote Bremsbarriere 60b dargestellt, wodurch eine Vollbremsung als optimales Fahrmanöver vorgeschlagen wird.

Außerdem wird die Art des Manövers durch ein prägnantes wiedererkennbares akustisches Signal 60' unterstützt, das durch einen Lautsprecher 204 in den Innenraum des Kraftfahrzeugs abgegeben wird. Dabei wird ein sehr eingeschränktes Repertoire verwendet, nämlich ein Signal für Vorbeifahren, ein zweites Signal für Vorbeifahren rechterhand und eine drittes Signal für maximales Bremsen.

Neben den beschriebenen Signalen 60a, 60b werden auch relevante Hindernisse dargestellt. Diese Hindernisse werden je nach Schadenspotential unterschiedlich kodiert dargestellt, nämlich "harte oder wertvolle" Hi n-dernisse in roter Farbe, "weiche oder weniger wertvolle" Hindernisse in gelber Farbe. Wichtig ist, die Anzahl der dargestellten Hindernisse gering zu halten.

In Figur 3 ist der Einsatz des Informationssystems 100, nämlich des Head-up-Displays in einem Fahrzeug gezeigt, wobei das Fahrzeug auf der Autobahn auf ein Stauende auffährt. Auf der Windschutzscheibe 200 des Fahrzeugs ist an zentraler Stelle als optisches Signal 60a die Richtung des berechneten optimalen Fahrmanövers als Handlungsanweisung dargestellt, nämlich eine Empfehlung für ein Ausweichmanöver in Form eines grünen Pfeils.

Folgt der Fahrer dem Signal 60a, das ein Ausweichen auf einen sich zwischen Mittelleitplanke 400 und Fahrbahn befindlichen Grünstreifen empfiehlt, so wird eine Kollision zumindest mit den benachbarten Fahrzeugen 402, 404 und höchstwahrscheinlich auch mit der Mittelleitplanke 400 vermieden.

Um in allen Situationen die optimale Entscheidung treffen können, wird es beim Informationssystem 100 gemäß den Figuren 1 bis 3 dem Fahrer 300 überlassen, ob er der Empfehlung folgt oder ob er auf andere Weise auf ein Hindernis reagiert. Es kann in erfindungswesentlicher Weise aber auch vorgesehen sein, die vorgeschlagene Handlungsempfehlung automatisch durchführen zu lassen.

## Patentansprüche

1. Fahrerinformationssystem (100) für ein Kraftfahrzeug, mit mindestens einer Erfassungseinheit (10)-- mit mindestens einem internen Sensor (20a, 20b; 22, 24, 26, 28) zur Erfassung mindestens einer Fahrbedingung des Kraftfahrzeugs, mit mindestens einem externen Sensor (32, 34, 36, 38) zur Ortung mindestens eines Objekts (400, 402, 404) in der Umgebung des Kraftfahrzeugs und mit mindestens einer Auswertungseinheit (40), die von der Erfassungseinheit (10) gelieferte Daten hinsichtlich verschiedener, durch die Fahrbedingung und durch die Umgebung bedingter Fahrzustände auswertet und mindestens ein Modell eines Gefahrenraums erstellt, sowie mit mindestens einer Einrichtung (50) zum Senden mindestens eines Signals (60a, 60b, 60')**dadurch gekennzeichnet, dass** weitere Daten des mindestens einen georteten Objekts, die das Schadenspotenzial hinsichtlich einer Gefährdung des Kraftfahrzeugs und dessen Insassen durch das geortete Objekt oder hinsichtlich einer Gefährdung an dem georteten Objekt (400, 402, 404) beschreiben, von der Auswertungseinheit (40) berücksichtigt werden und dass die berücksichtigten weiteren Daten in die Erstellung des Modells des Gefahrenraums einbezogen werden.

2. Fahrerinformationssystem gemäß Anspruch 1, **dadurch gekennzeichnet, dass** die Auswertungseinheit (40) unter Berücksichtigung aller Daten ein optimales Fahrmanöver berechnet und dass die Einrichtung (50) in Abhängigkeit von den Daten der Auswertungseinheit (40) zumindest bei Gefahr das optimale Fahrmanöver in Form des handlungsweisenden Signals (60a, 60b, 60') angibt.

3. Fahrerinformationssystem nach einem der vorhergehenden Ansprüche, **dadurch gekennzeichnet, dass** die Einrichtung (50) zum Senden mindestens eines Signals (60a, 60b, 60') zum Darstellen mindestens eines virtuellen Bilds vor oder auf eine Windschutzscheibe (200) des Kraftfahrzeugs ausgelegt ist.

4. Verfahren zum Warnen eines Führers (300) eines Kraftfahrzeugs, wobei Daten mittels mindestens einer mindestens einen internen Sensor (20a, 20b; 22, 24, 26, 28) sowie mindestens einen externen Sensor (32, 34, 36, 38) aufweisenden Erfassungseinheit (10) erhoben werden, wobei mindestens eine Fahrbedingung des Kraftfahrzeugs mittels des internen Sensors (20a, 20b; 22, 24, 26, 28) erfasst wird und mindestens ein relevantes stationäres und/oder mobiles Objekt (400, 402, 404) in der Umgebung des Kraftfahrzeugs mittels des externen Sensors (32, 34, 36, 38) geortet wird, wobei die von der Erfassungseinheit (10) gelieferten Daten hinsichtlich verschiedener, durch die Fahrbedingung und durch die Umgebung bedingter Fahrzustände von mindestens einer Auswertungseinheit (40) ausgewertet werden, **dadurch gekennzeichnet, dass** weitere Daten des mindestens einen georteten Objekts, die das Schadenspotenzial hinsichtlich einer Gefährdung des Kraftfahrzeugs und dessen Insassen durch das geortete Objekt oder hinsichtlich einer Gefährdung an dem georteten Objekt (400, 402, 404) beschreiben, von der Auswertungseinheit (40) berücksichtigt werden, dass die berücksichtigten weiteren Daten in die Erstellung des Modells des Gefahrenraums einbezogen werden und in Abhängigkeit von dem erstellten Modell des Gefahrenraums ein Signal (60a, 60b, 60') mittels mindestens einer Einrichtung (50) gesendet wird.

5. Verfahren nach Anspruch 4, **dadurch gekennzeichnet, dass** die Auswertungseinheit (40) das Objekt (400, 402, 404) in der Umgebung des Kraftfahrzeugs je nach Schadenspotential unterschiedlich kodiert darstellt.

6. Verfahren nach einem der Ansprüche 4-5, **dadurch gekennzeichnet, dass** die Auswertungseinheit (40) aus der Gesamtheit der von der Erfassungseinheit (10) gelieferten Daten mögliche Fahrmanöver zum Ausweichen vor dem Objekt (400, 402, 404) berechnet und die möglichen Fahrmanöver miteinander vergleicht, ein optimales Fahrmanöver auswählt und die Daten des optimalen Fahrmanövers an die Einrichtung (50) weiterleitet.

7. Verfahren nach einem der Ansprüche 4-6, **dadurch gekennzeichnet, dass**, mindestens zur Ausgabe des Signals mindestens ein virtuelles Bild vor oder auf eine Windschutzscheibe (200) des Kraftfahrzeugs projiziert wird.

8. Verfahren nach einem der Ansprüche 4-7, **dadurch gekennzeichnet, dass** eine Trajektorie des georteten Objekts (400, 402, 404) berechnet wird.

## Claims

1. Driver information system (100) for a vehicle, having at least one sensing unit (10) with at least one internal sensor (20a, 20b; 22, 24, 26, 28) for sensing at least one driving condition of the motor vehicle, having at least one external sensor (32, 34, 36, 38) for locating at least one object (400, 402, 404) in the surroundings of the motor vehicle and having at least one evaluation unit (40) which evaluates data supplied by the sensing unit (10) and relating to various driving states which are conditioned by the driving condition and by the surroundings, and produces at least one model of a hazard space, as well as having at least one device (50) for transmitting at least one signal (60a, 60b, 60'), **characterized in that** further data of the at least one located object which describes the damage potential in terms of danger to the motor vehicle and its vehicle occupants by the located object or in terms of danger to the located object (400, 402, 404), is taken into account by the evaluation unit (40), and **in that** the further data which is taken into account is included in the production of the model of the danger space.

2. Driver information system according to Claim 1, **characterized in that** the evaluation unit (40) calculates an optimum driving manoeuvre taking into account all the data, and **in that** the device (50) specifies the optimum driving manoeuvre in the form of the action-indicating signal (60a, 60b, 60') as a function of the data of the evaluation unit (40), at least in the event of danger.

3. Driver information system according to one of the preceding claims, **characterized in that** the device (50) is configured to transmit at least one signal (60a, 60b, 60') in order to display at least one virtual image in front of or on a windscreen (200) of the motor vehicle.

4. Method for warning a driver (300) of a motor vehicle, wherein data is acquired by means of at least one sensing unit (10) having at least one internal sensor (20a, 20b; 22, 24, 26, 28) and at least one external sensor (32, 34, 36, 38), wherein at least one driving condition of the motor vehicle is sensed by means of the internal sensor (20a, 20b; 22, 24, 26, 28), and at least one relevant stationary and/or mobile object (400, 402, 404) is located in the surroundings of the motor vehicle by means of the external sensor (32, 34, 36, 38), wherein at least one evaluation unit (40) evaluates the data supplied by the sensing unit (10) in relation to various driving states which are conditioned by the driving condition and by the surroundings, **characterized in that** further data of the at least one located object which describes the damage potential in terms of danger to the motor vehicle and its vehicle occupants by the located object or in terms of danger to the located object (400, 402, 404) is taken into account by the evaluation unit (40), **in that** the further data which is taken into account is included in the production of the model of the danger space and a signal (60a, 60b, 60') is transmitted by means of at least one device (50) as a function of the model which is produced of the danger space.

5. Method according to Claim 4, **characterized in that** the evaluation unit (40) displays the object (400, 402, 404) in the surroundings of the motor vehicle with different coding depending on the damage potential.

6. Method according to one of Claims 4-5, **characterized in that** the evaluation unit (40) calculates, from the entirety of the data supplied by the sensing unit (10), possible avoidance driving manoeuvres before the object (400, 402, 404) and compares the possible driving manoeuvres with one another, selects an optimum driving manoeuvre and passes on the data of the optimum driving manoeuvre to the device (50).

7. Method according to one of Claims 4-6, **characterized in that** at least one virtual image is projected in front of or onto a windscreen (200) of the motor vehicle at least in order to output the signal.

8. Method according to one of Claims 4-7, **characterized in that** a trajectory of the located object (400, 402, 404) is calculated.

## Revendications

1. Système d'information de conducteur (100) pour un véhicule automobile comportant au moins une unité de saisie (10) ayant au moins un capteur interne (20a, 20b ; 22, 24, 26, 28) pour saisir au moins une condition de conduite du véhicule, au moins un capteur externe (32, 34, 36, 38) pour localiser au moins un objet (400, 402, 404) dans l'environnement du véhicule et au moins une unité d'exploitation (40) recevant les données fournies par l'unité de saisie (10) concernant différents états conditionnés par les conditions de conduite et l'environnement et forme un modèle de l'espace des risques ainsi qu'au moins une installation (50) pour émettre au moins un signal (60a, 60b, 60'),
**caractérisé en ce que**
d'autres données d'au moins un objet localisé qui décrivent le danger potentiel concernant le véhicule et ses occupants par cet objet localisé ou par un risque au niveau de l'objet localisé (400, 402, 404), sont prises en compte par l'unité d'exploitation (40) et
les autres données prises en compte sont utilisées pour établir le modèle de l'espace de danger.

2. Système d'information de conducteur selon la revendication 1,
**caractérisé en ce que**
l'unité d'exploitation (40), en tenant compte de toutes les données, calcule une manoeuvre de conduite optimale et
l'installation (50) indique en fonction des données de l'unité d'exploitation (40), au moins en cas de danger, la manoeuvre de conduite optimale sous la forme de signaux indicateurs de manoeuvres (60a, 60b, 60').

3. Système d'information de conducteur selon l'une des revendications précédentes,
**caractérisé en ce que**
l'installation (50) est conçue pour émettre au moins un signal (60a, 60b, 60') pour représenter au moins une image virtuelle devant le pare-brise ou sur le pare-brise (200) du véhicule.

4. Procédé d'avertissement du conducteur (300) d'un véhicule automobile selon lequel les données sont recueillies à partir d'au moins une unité de saisie (10) ayant au moins un capteur interne (20a, 20b ; 22, 24, 26, 28) et au moins un capteur externe (32, 34, 36, 38),
au moins une condition de conduite du véhicule est saisie à l'aide du capteur interne (20a, 20b ; 22, 24, 26, 28) et au moins un objet stationnaire et/ou mobile déterminant (400, 402, 404) est localisé dans l'environnement du véhicule à l'aide d'un capteur externe (32, 34, 36, 38),
les données fournies par l'unité de saisie (10) concernant différents états de conduite liés à la condition de conduite et à l'environnement sont exploitées par au moins une unité d'exploitation (40),
**caractérisé en ce que**
d'autres données d'au moins un objet localisé qui décrivent le dommage potentiel concernant un risque pour le véhicule et ses occupants par l'objet localisé ou du point de vue du risque de l'objet localisé (400, 402, 404), sont prises en compte par l'unité d'exploitation (40),
les autres données prises en compte sont utilisées pour établir le modèle de l'espace de danger et en fonction du premier modèle de l'espace de danger, au moins une installation (50) émet un signal (60a, 60b, 60').

5. Procédé selon la revendication 4,
**caractérisé en ce que**
l'unité d'exploitation (40) représente l'objet (400, 402, 404) dans l'environnement du véhicule, différemment suivant le potentiel de dommage.

6. Procédé selon l'une des revendications 4 et 5,
**caractérisé en ce que**
l'unité d'exploitation (40) calcule à partir de l'ensemble des données fournies par l'unité de saisie (10), les manoeuvres de conduite possibles pour éviter l'objet (400, 402, 404) et compare entre elles les manoeuvre de conduite possibles pour sélectionner une manoeuvre optimale et transmettre les données de la manoeuvre optimale à l'installation (50).

7. Procédé selon l'une des revendications 4 à 6,
**caractérisé en ce qu'**
une image virtuelle est projetée devant le pare-brise (200) du véhicule ou sur celui-ci pour émettre au moins le signal.

8. Procédé selon l'une des revendications 4 à 7,
**caractérisé en ce qu'**
on calcule une trajectoire de l'objet localisé (400, 402, 404).
